# EUROPEAN PATENT APPLICATION

(11) **EP 1 555 829 A1**
(43) Date of publication of application: **20.07.2005**
(21) Application number: 04258143.9
(22) Date of filing: 24.12.2004
(51) Int. Cl.: H04N 7/26

(54) **Video/image coding method and system enabling region-of-interest**

(30) Priority: 13.01.2004 KR 2004002378
(71) Applicant: Samsung Electronics Co., Ltd., Suwon-si, Gyeonggi-do (KR)
(72) Inventor: Lee, Bae-keun, Bucehon-si Gyeonggi-do (KR); Han, Woo-jin, Nr. 108-703 Jugong 2-danji Apt., Suwon-si Gyeonggi-do (KR)
(74) Representative: Davies, Robert Ean

(57) **Abstract**

A method and apparatus for compressing a video/image using a region-of-interest (ROI), which allows only a particular region to be emphasized within a single frame during wavelet-based scalable video/image coding. The method includes generating wavelet coefficients by performing wavelet transform on an input image (304), rearranging the wavelet coefficients in wavelet blocks according to spatial relevancy among the wavelet coefficients (305), and quantizing the wavelet coefficients in each of the wavelet blocks (306). According to the method and apparatus, blocking artifacts occurring when an image is segmented into blocks and an ROI method is used can be decreased.

## Description

The present invention relates to video compression, and more particularly, but not exclusively to a region-of-interest (ROI) method allowing only a particular region to be emphasized within a single frame during wavelet-based scalable video/image coding.

With the development of information communication technology, including the Internet, video communication, as well as text and voice communication has substantially increased. Conventional text communication cannot satisfy users' various demands, and thus multimedia services that can provide various types of information such as text, pictures, and music have increased. Multimedia data requires a large capacity of storage media and a wide bandwidth for transmission, since the amount of multimedia data is usually large. Accordingly, a compression coding method is required for transmitting multimedia data including text, video, and audio.

A basic principle of data compression lies in removing data redundancy. Data can be compressed by removing spatial redundancy in which the same color or object is repeated in an image, temporal redundancy in which there is little change between adjacent frames in a moving image or the same sound is repeated in audio, or mental visual redundancy taking into account human eyesight and perception, which is relatively dull to high frequency.

Most video coding standards are based on motion compensation/estimation coding. The temporal redundancy is removed using temporal filtering based on motion compensation, and the spatial redundancy is removed using spatial transform.

A transmission medium is required to transmit multimedia generated after removing the data redundancy. Transmission performance is different depending on transmission media. Currently used transmission media have various transmission rates. For example, an ultrahigh-speed communication network can transmit data of several tens of megabits per second, while a typical mobile communication network has a transmission rate of 384 kilobits per second.

To support transmission media having various speeds or to transmit multimedia at a rate suitable to a transmission environment, data coding methods having scalability may be suitable to a multimedia environment.

Scalability indicates a characteristic enabling a decoder or a pre-decoder to partially decode a single compressed bitstream according to conditions such as a bit rate, an error rate, and system resources. A decoder or a pre-decoder can reconstruct a multimedia sequence having different picture quality, resolutions, or frame rates using only a portion of a bitstream that has been coded according to a method having scalability.

In Moving Picture Experts Group-21 (MPEG-21) Part 13, scalable video coding is under standardization. A wavelet-based spatial transform method is considered as the strongest candidate for the standard scalable video coding. For a still image (hereinafter, referred to as an image), a Joint Photographic Coding Experts Group-2000 (JPEG-2000) wavelet-based scalable image coding method has already been put to practical use.

Only a small number of conventional wavelet-based video/image coding methods have enabled a region-of-interest (ROI) function. However, wavelet-based image coding such as the JPEG-2000 enables the ROI function using tiling. Accordingly, video coders using the JPEG-2000 for spatial transform can be considered as enabling the ROI function.

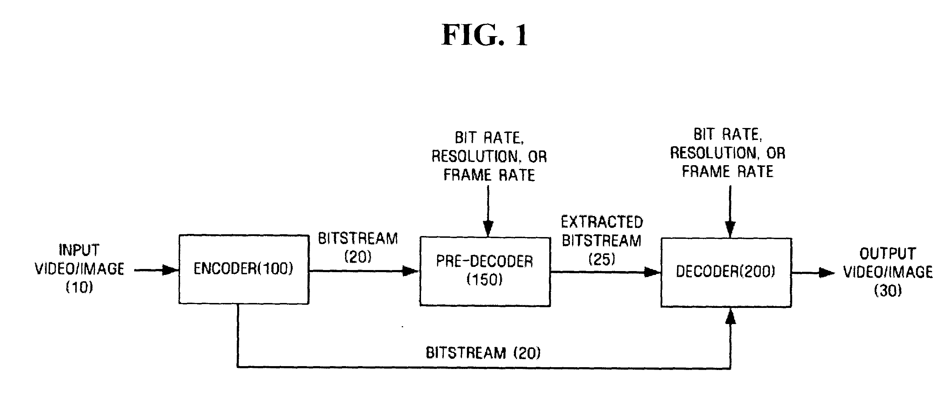

FIG. 1 schematically illustrates an entire structure of a conventional scalable video/image coding system. An encoder 100 may be considered as a video/image compression apparatus, and a decoder 200 may be considered as a video/image decompression apparatus.

The encoder 100 codes an input video/image 10, thereby generating a bitstream 20.

A pre-decoder 150 can extract a different bitstream 25 by variously cutting the bitstream 20 received from the encoder 100 according to an extraction condition, such as a bit rate, a resolution, or a frame rate, related with an environment of communication with the decoder 200 or mechanical performance of the decoder 200.

The decoder 200 reconstructs an output video/image 30 from the extracted bitstream 25. Extraction of a bit stream according to an extraction condition may be performed by the decoder 200 instead of the pre-decoder 150 or may be performed both of the pre-decoder 150 and the decoder 200.

FIG. 2 illustrates a conventional tiling method used in the JPEG-2000.

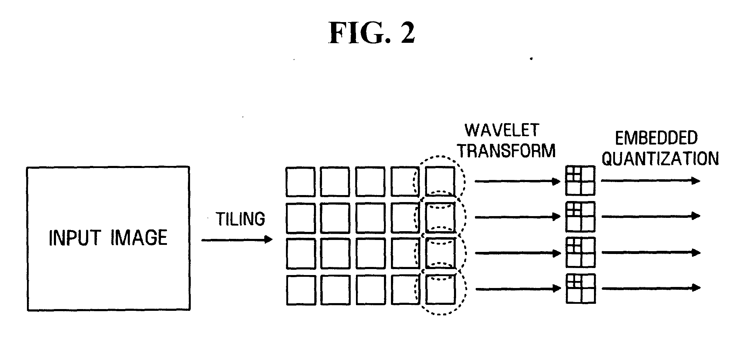

As shown in FIG. 2, an input image is divided into a predetermined number (e.g., 5x4) of tiles in a tiling process. Next, wavelet transform is performed on each of the tiles, thereby generating a wavelet coefficient. Embedded quantization is performed on wavelet coefficients, thereby generating a compressed bitstream. An Embedded Zerotrees Wavelet (EZW) algorithm, Set Partitioning in Hierarchical Trees (SPIHT), or Embedded ZeroBlock Coding (EZBC) is used for the embedded quantization.

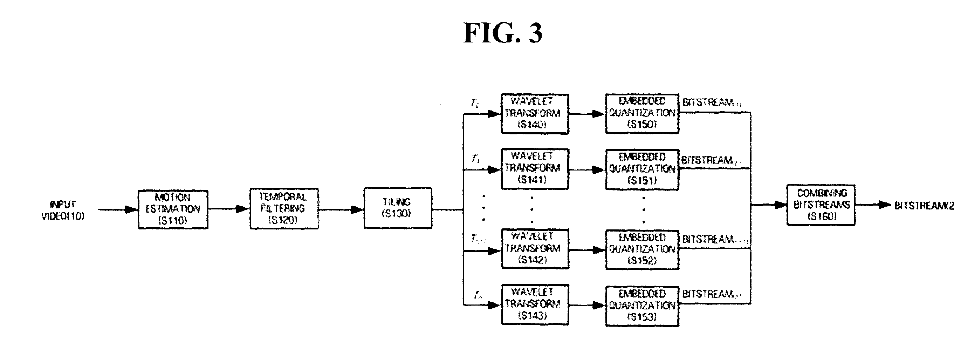

FIG. 3 is a flowchart of a wavelet-based scalable video encoding method in which a motion compensated residual is compressed using the tiling method shown in FIG. 2.

Motion estimation is performed with respect to an input video 10 in step S110. Temporal filtering is performed using a motion vector obtained from the motion estimation in step S120. A spatial domain, i.e., a motion compensated residual frame resulting from the temporal filtering, is divided into a plurality of tiles or blocks T₀, T₁, ..., Tₙ₋₁, Tₙ in step S130.

Next, wavelet transform is individually performed on the tiles To through Tn in steps S140 through S143. Wavelet coefficients resulting from the wavelet transform are individually quantized, thereby generating bitstreams in steps S150 through S153. The generated bitstreams are combined into a single bitstream 20 in step S160.

An appropriate number of bits may be allocated to each bitstream generated with respect to each tile. When bits are adaptively allocated to image content, overall performance can be improved. In addition, when more bits are allocated to a particular tile, quality of an ROI can be improved more.

The conventional tiling method largely has three problems.

First, since tiles are independently encoded, blocking artifacts significantly occur at boundaries among the tiles during reconstruction. Second, since similarity between tiles is not utilized, overall performance is deteriorated. Third, since wavelet transform is not effective for a small tile, performance is deteriorated when a size of a tile is small.

Embodiments of the present invention provide a method and system for enabling a region-of-interest (ROI) in a wavelet domain in a method of coding an input image based on a wavelet, thereby improving a conventional tiling method in a spatial domain.

Embodiments of the present invention also provide a method and system for enabling an ROI and alleviating blocking artifacts at boundaries.

According to an aspect of the present invention, there is provided a method of compressing a video/image, comprising generating wavelet coefficients by performing wavelet transform on an input image, rearranging the wavelet coefficients in wavelet blocks according to spatial relevancy among the wavelet coefficients, and quantizing the wavelet coefficients in each of the wavelet blocks.

According to another aspect of the present invention, there is provided a method of decompressing a video/image, comprising obtaining wavelet coefficients arranged in wavelet blocks according to spatial relevancy using an input bitstream, rearranging the wavelet coefficients in a single entire image, and transforming the rearranged wavelet coefficients to reconstruct an image in a spatial domain.

According to another aspect of the present invention, there is provided an apparatus for compressing a video/image, comprising a wavelet transform unit which generates wavelet coefficients by performing wavelet transform on an input image, a pixel grouping unit which rearranges the wavelet coefficients in wavelet blocks according to spatial relevancy among the wavelet coefficients, and an embedded quantization unit which quantizes the wavelet coefficients in each of the wavelet blocks.

According to another aspect of the present invention, there is provided an apparatus of decompressing a video/image, comprising an inverse embedded quantization unit which obtains wavelet coefficients arranged in wavelet blocks according to spatial relevancy using an input bitstream, an inverse pixel grouping unit which rearranges the wavelet coefficients arranged in the wavelet blocks in a single entire image, and an inverse wavelet transform unit which transforms the rearranged wavelet coefficients to reconstruct an image in a spatial domain.

For a better understanding of the invention, and to show how embodiments of the same may be carried into effect, reference will now be made, by way of example, to the accompanying diagrammatic drawings in which:
FIG. 1 is a schematic conceptual diagram of an entire structure of a conventional scalable video/image coding system;
FIG. 2 illustrates a conventional tiling method used in a Joint Photographic Coding Experts Group-2000 (JPEG-2000);
FIG. 3 is a flowchart of a wavelet-based scalable video encoding method in which a motion compensated residual is compressed using a conventional tiling method;
FIG. 4 is a block diagram of an encoder according to an embodiment of the present invention;
FIG. 5 illustrates an example of a procedure for decomposing an input image or frame into sub-bands using wavelet transform;
FIG. 6 is a schematic conceptual diagram of a tiling process according to an embodiment of the present invention;
FIG. 7 illustrates an example of pixel grouping;
FIG. 8 is a block diagram of a pre-decoder according to an embodiment of the present invention;
FIG. 9 is a block diagram of a decoder according to an embodiment of the present invention;
FIG. 10 is a flowchart of an encoding method according to an embodiment of the present invention;
FIG. 11 is a flowchart of a method of using a region-of-interest (ROI) according to an embodiment of the present invention;
FIG. 12 is a flowchart of a decoding method according to an embodiment of the present invention;
FIG. 13 is a flowchart of conventional embedded quantization;
FIG. 14 is a flowchart of embedded quantization (i.e., S250 through S253 shown in FIG. 10) according to an embodiment of the present invention; and
FIG. 15 is a block diagram of a system for performing an encoding, pre-decoding, or decoding method according to an embodiment of the present invention.

Throughout the specification, the term "video" indicates a moving picture, and the term "image" indicates a still picture. The term "video/image" includes a video and an image.

Exemplary embodiments of the present invention will now be described with reference to the accompanying drawings. The present invention may, however, be embodied in many different forms and should not be construed as being limited to the embodiments set forth herein. Rather, these embodiments are provided so that this disclosure will be thorough and complete, and will fully convey the scope of various exemplary embodiments of the invention to those skilled in the art. The scope of the invention is defined only by the appended claims. Like numbers refer to like elements throughout this description and the drawings.

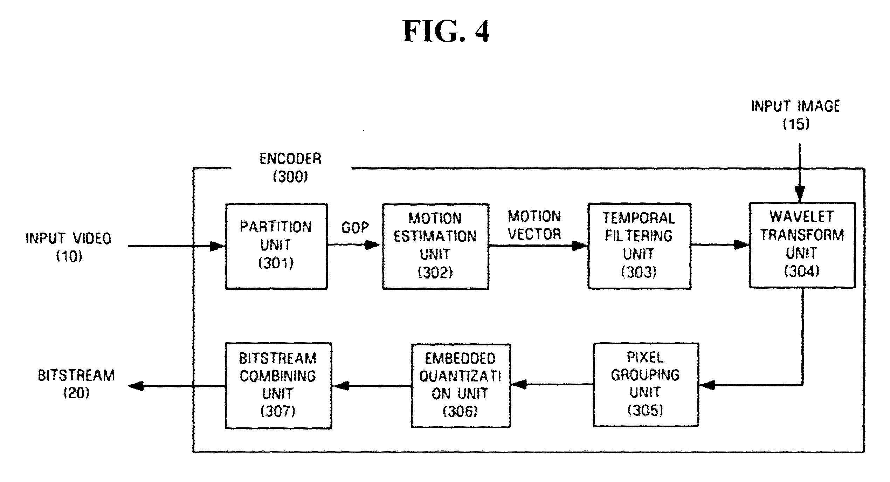

FIG. 4 is a block diagram of an encoder 300 according to an embodiment of the present invention. The encoder 300 includes a partition unit 301, a motion estimation unit 302, a temporal filtering unit 303, a wavelet transform unit 304, a pixel grouping unit 305, an embedded quantization unit 306, and a bitstream combining unit 307. [01] The partition unit 301 divides an input video 10 into basic encoding units, i.e., groups of pictures (GOPs).

The motion estimation unit 302 performs motion estimation with respect to frames included in each GOP, thereby obtaining a motion vector. A hierarchical method such as a Hierarchical Variable Size Block Matching (HVSBM) may be used to implement the motion estimation.

The temporal filtering unit 303 decomposes frames into low- and high-frequency frames in a temporal direction using the motion vector obtained by the motion estimation unit 302, thereby reducing temporal redundancy.

For example, an average of frames may be defined as a low-frequency component, and half of a difference between two frames may be defined as a high-frequency component. Frames are decomposed in units of GOPs. Frames may be decomposed into high- and low-frequency frames by comparing pixels at the same positions in two frames without using a motion vector. However, the method not using a motion vector is less effective in reducing temporal redundancy than the method using a motion vector.

In other words, when a portion of a first frame is moved in a second frame, an amount of a motion can be represented by a motion vector. The portion of the first frame is compared with a portion to which a portion of the second frame at the same position as the portion of the first frame is moved by the motion vector, that is, a temporal motion is compensated. Thereafter, the first and second frames are decomposed into low- and high-frequency frames.

Motion Compensated Temporal Filtering (MCTF) may be used for temporal filtering.

The wavelet transform unit 304 performs wavelet transform on a frame from which temporal redundancy is removed by the temporal filtering unit 303, thereby decomposing the frame into low- and high-frequency sub-bands, and obtains wavelet coefficients for the respective low- and high-frequency sub-bands.

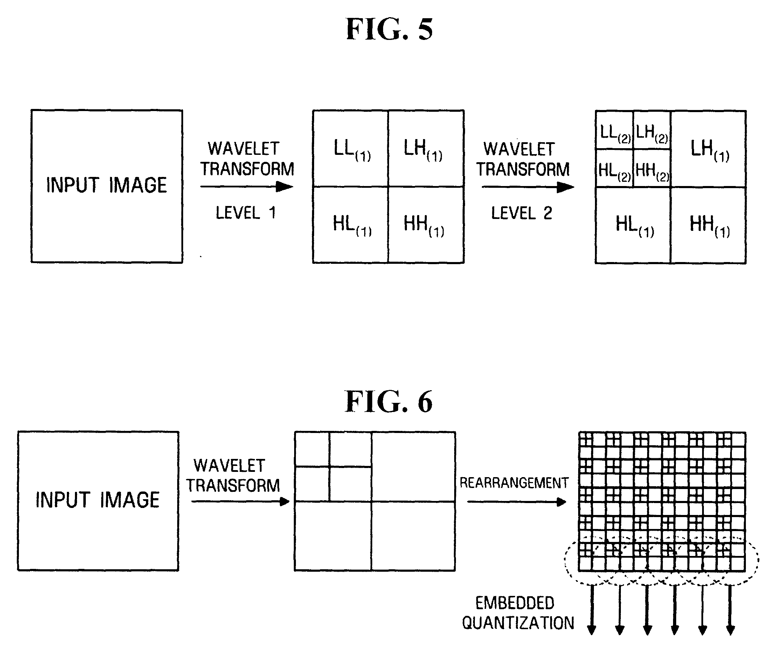

FIG. 5 illustrates an example of a procedure for decomposing an input image or frame into sub-bands using wavelet transform. Decomposition is performed in two levels, i.e., level 1 and level 2.

There are three types of high-frequency sub-bands in horizontal, vertical, and diagonal directions, respectively. A low-frequency sub-band, i.e., a sub-band having a low frequency in both of the horizontal and vertical directions, is expressed as "LL". The three types of high-frequency sub-bands, i.e., a horizontal high-frequency sub-band, a vertical high-frequency sub-band, and a horizontal and vertical high-frequency sub-band, are expressed as "LH", "HL", and "HH", respectively. The low-frequency sub-band is decomposed again. In FIG. 5, the numerals in parentheses indicate a wavelet transform level.

Referring back to FIG. 4, the pixel grouping unit 305 rearranges wavelet coefficients (or pixels), which are obtained after spatial redundancy is removed from the input image using wavelet transform, according to spatial relevancy, thereby generating a predetermined number of wavelet blocks.

Unlike conventional technology such as the JPEG-2000 in which an input image is segmented in a spatial domain, in the exemplary embodiment of the present invention, an input is first subjected to wavelet transform, and then pixels having spatial relevancy in a wavelet domain are grouped into a single set. Grouping and rearranging pixels is implemented by rearranging wavelet coefficients respectively corresponding to pixels.

A set into which relevant pixels are grouped is referred to as a wavelet block (WB). The wavelet block is used to realize spatial scalability, for example, in wavelet-based video coding.

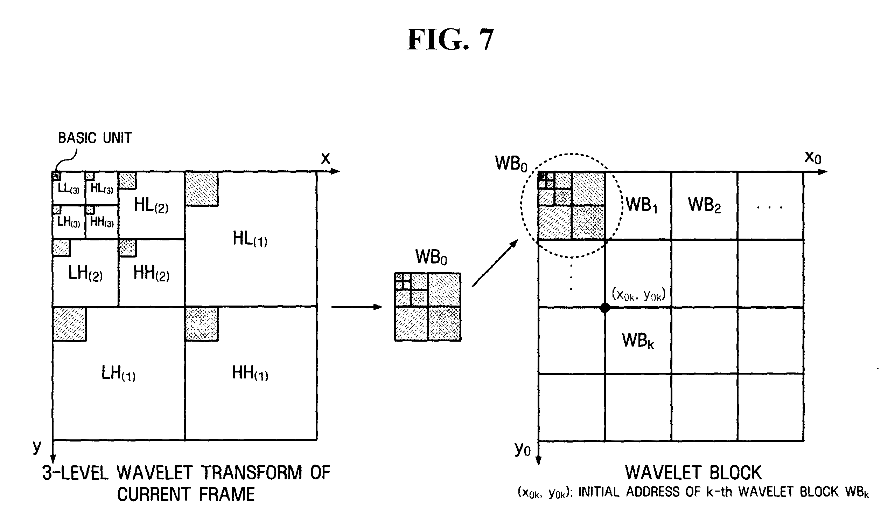

FIG. 7 illustrates an example of pixel grouping. A wavelet block is basically constructed by collecting a single pixel in an L band (e.g., LL₍₃₎) and pixels having relevancy to the single pixel in other bands during wavelet transform. When a wavelet level is "n", an ROI has a size of 2ⁿ×2ⁿ pixels.

When an ROI is small, detailed ROI control can be accomplished, but too many wavelet blocks are used, and thus a processing speed may be decreased. To overcome this problem, a wavelet block may be constructed by collecting a plurality of pixels in an L band.

In other words, a wavelet block may be constructed by collecting relevant pixels among a plurality of pixels in an L band (usually having a size of 2x2, 4x4, or 8x8). In this case, an ROI cannot be minutely designated compared to the case where a wavelet block is constructed by collecting a pixel in an L band and relevant pixels in other bands. However, the number of wavelet blocks can be decreased and can be appropriately determined according to application fields.

Hereinafter, at least one pixel in an L band that is a reference for finding pixels having spatial relevancy is referred to as a "basic unit". A size of a wavelet block can be variously adjusted by adjusting a size of such basic unit.

A wavelet block corresponds to a single tile (or block) in a spatial domain. However, this correspondence is not exact, and a wavelet block has the same meaning as a result of wavelet transform performed in consideration of spatial similarity of pixels around tile boundaries.

In other words, since wavelet transform provides spatially more smooth coefficients than the spatial domain, blocking artifacts occurring because a different number of bits are allocated to each wavelet block appear in a wavelet domain unlike in a tiling method. Accordingly, an image reconstructed by a decoder finally through inverse wavelet transform does not have blocking artifacts but has ringing artifacts. Having ringing artifacts is relatively more advantageous than having blocking artifacts in terms of subjective picture quality.

Referring back to FIG. 7, pixels at the same relative positions as a basic unit in sub-bands other than an L band including the basic unit have spatial relevancy to the basic unit in the L band. In FIG. 7, portions having spatial relevancy are marked with deviant lines or a check pattern. A wavelet block WB₀ is a rearranged collection of the basic unit and portions having spatial relevancy to the basic unit. Accordingly, if the wavelet block WB₀ is subjected to inverse wavelet transform, an image of a corresponding position to the WB₀ in the spatial domain (the upper-left part of 1/16 area) can be reconstructed.

Referring back to FIG. 4, the embedded quantization unit 306 performs embedded quantization on wavelet coefficients rearranged in each wavelet block by the pixel grouping unit 305.

An Embedded Zerotrees Wavelet (EZW) algorithm, Set Partitioning in Hierarchical Trees (SPIHT), or Embedded ZeroBlock Coding (EZBC) may be used to perform embedded quantization on wavelet coefficients in each wavelet block. Since these methods for embedded quantization allow a spatial relationship between pixels in a wavelet domain used in the present invention to be utilized well, they are suitable for embedded quantization performed in the present invention.

Spatial relationships between pixels are expressed in a tree shape. Effective coding can be carried out using the fact that when a root in the tree is 0, children in the tree have a high probability of being 0. While pixels having relevancy to a pixel in the L band are being scanned, algorithms are performed.

To realize scalability, embedded quantization is performed by encoding only pixels having greater values than a predetermined threshold value and, after completing the encoding, lowering the threshold value and repeating the encoding process.

The bitstream combining unit 307 combines bitstreams generated for respective wavelet blocks by the embedded quantization unit 306 into a single bitstream 20.

Embodiments of the present invention can be used for still pictures (i.e., images) as well as moving pictures (i.e., videos). An input image 15 can be processed by the wavelet transform unit 304, the pixel grouping unit 305, the embedded quantization unit 306, and the bitstream combining unit 307 in the same manner as the input video 10 is processed and thus generated as the bitstream 20.

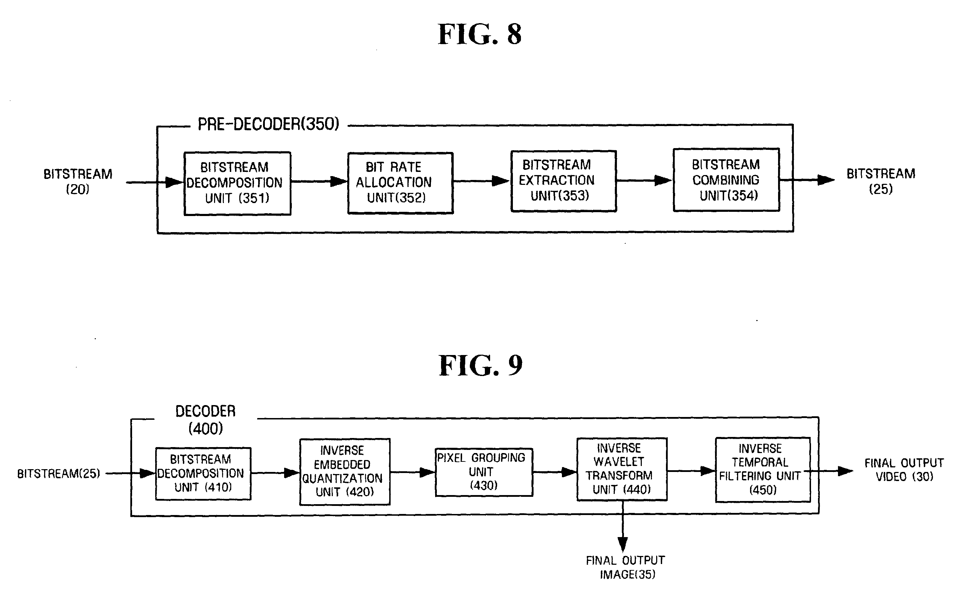

FIG. 8 is a block diagram of a pre-decoder according to an embodiment of the present invention.

Even when the encoder 300 has performed encoding without considering an ROI, the pre-decoder 350 or a trans-coder can generate a new bitstream by designating an ROI and allocating more bits to the ROI than other regions. Actually, generation of a new bitstream is implemented by truncating a bitstream for each wavelet block.

The pre-decoder 350 includes a bitstream decomposition unit 351, a bit rate allocation unit 352, a bitstream extraction unit 353, and a bitstream combining unit 354. [02] The bitstream decomposition unit 351 decomposes the bitstream 20 received from the encoder 300 into bitstreams for respective wavelet blocks.

The bit rate allocation unit 352 allocates a bit rate to each of the decomposed bitstreams. For this operation, the bit rate allocation unit 352 determines a target bit rate with respect to an entire frame, and allocates higher bit rates to portions determined as being more important than other portions such that the sum of allocated bit rates becomes the target bit rate.

The bitstream extraction unit 353 truncates bitstreams according to the allocated bit rates, thereby extracting new bitstreams.

The bitstream combining unit 354 combines the new bitstreams extracted by the bitstream extraction unit 353 into a single bitstream 25.

FIG. 9 is a block diagram of a decoder according to an embodiment of the present invention. A decoder 400 includes a bitstream decomposition unit 410, an inverse embedded quantization unit 420, a pixel grouping unit 430, an inverse wavelet transform unit 440, and an inverse temporal filtering unit 450.

The decoder 400 operates in an order reverse to an order of the operations of the encoder 300 except for a motion estimation operation for obtaining a motion vector. The decoder 400 can just receive and use a motion vector obtained through motion estimation from the motion estimation unit 302 of the encoder 300. Accordingly, in the reverse order, a process corresponding to motion estimation does not exist.

The bitstream decomposition unit 410 decomposes the bitstream 25 received from the pre-decoder 350 into bitstreams for respective wavelet blocks. For the bitstream 20 directly received from the encoder 300, the decoder 400 also performs the same operations as performed on the bitstream 25 generated through bit allocation for designating an ROI by the pre-decoder 350.

The inverse embedded quantization unit 420 performs the operations of the embedded quantization unit 306 of the encoder 300 in a reverse order. In other words, wavelet coefficients arranged in units of wavelet blocks are rearranged in an entire image. This restoration is performed in an order reverse to the rearrangement order shown in FIG. 6.

The inverse wavelet transform unit 440 transforms the rearranged wavelet coefficients to reconstruct an image in a spatial domain. During the transform, wavelet coefficients corresponding to each GOP are transformed according to inverse wavelet transform, thereby generating temporarily filtered frames.

The inverse temporal filtering unit 450 performs inverse temporal filtering using the frames generated by the inverse wavelet transform unit 440 and the motion vector generated by the encoder 300, thereby generating a final output vide 30.

The decoder of embodiments of the present invention can be used for images as well as videos. The bitstream 25 of an image received from the pre-decoder 350 can be processed by the bitstream decomposition unit 410, the inverse embedded quantization unit 420, the pixel grouping unit 430, and the inverse wavelet transform unit 440 in the same manner as the bitstream 25 of a video is processed, and thus generated as an output image 35.

In the embodiments shown in FIGS. 4, 8, and 9, the encoder 300, the pre-decoder 350, and the decoder 400 are separately implemented. However, the present invention is not restricted thereto, and it will be apparent to those skilled in the art that the encoder 300 may include the pre-decoder 350, or the decoder 400 may include the pre-decoder 350.

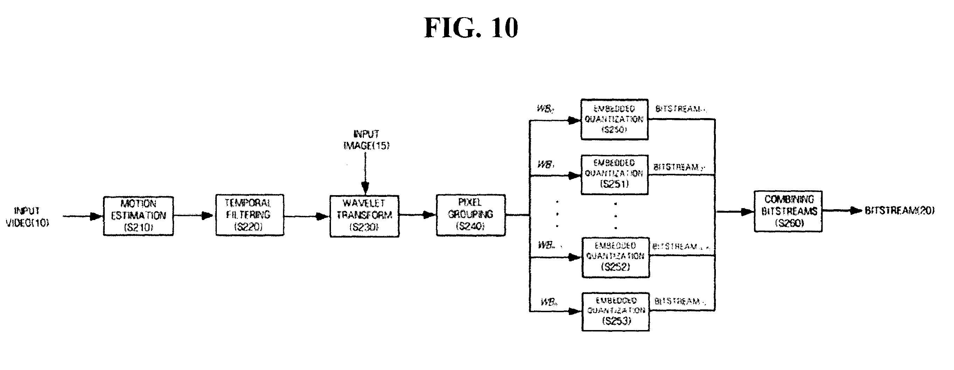

FIG. 10 is a flowchart of an encoding method according to an embodiment of the present invention.

The motion estimation unit 302 performs motion estimation on the input video 10, thereby generating a motion vector in step S210.

Temporal filtering for removing temporal redundancy by decomposing frames into low- and high-frequency frames in a temporal direction using the motion vector in step S220.

Next, wavelet transform is performed by dividing each of the frames from which the temporal redundancy has been removed into low- and high-frequency sub-bands and obtaining wavelet coefficients for the respective low- and high-frequency sub-bands in step S230.

Pixel grouping is performed by rearranging the wavelet coefficients, which have been obtained through the wavelet transform removing spatial redundancy, in wavelet blocks according to spatial relevancy in step S240.

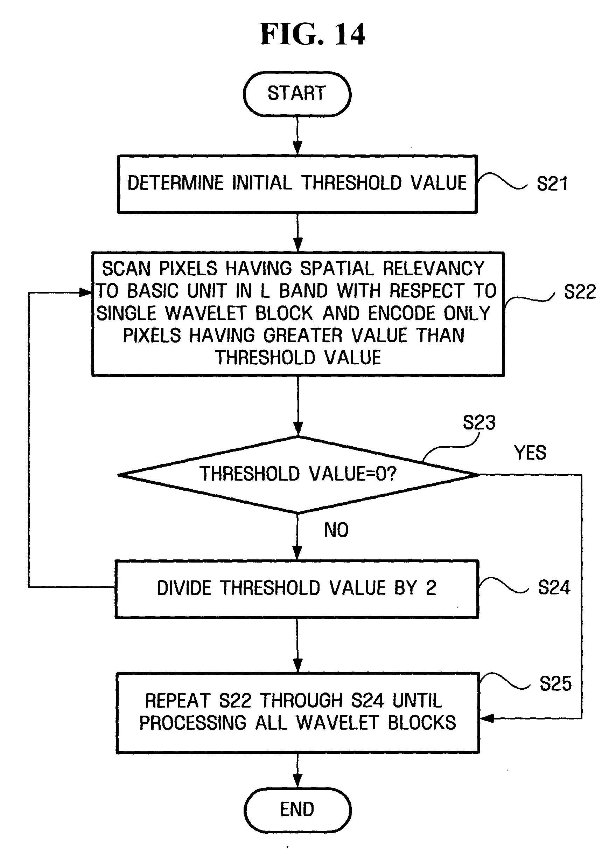

Embedded quantization is performed on each of the wavelet blocks, thereby generating bitstreams for the respective wavelet blocks in steps S250 through S253. The embedded quantization will be described in detail later with reference to FIG. 14.

Finally, the bitstreams generated for the respective wavelet blocks are combined into a single bitstream in step S260.

The encoding method shown in FIG. 10 is not restricted to moving pictures, i.e., videos. Steps S230 through S260 can be performed with respect to the input image 15, i.e. an input still picture, thereby generating the bitstream 20 of the still picture.

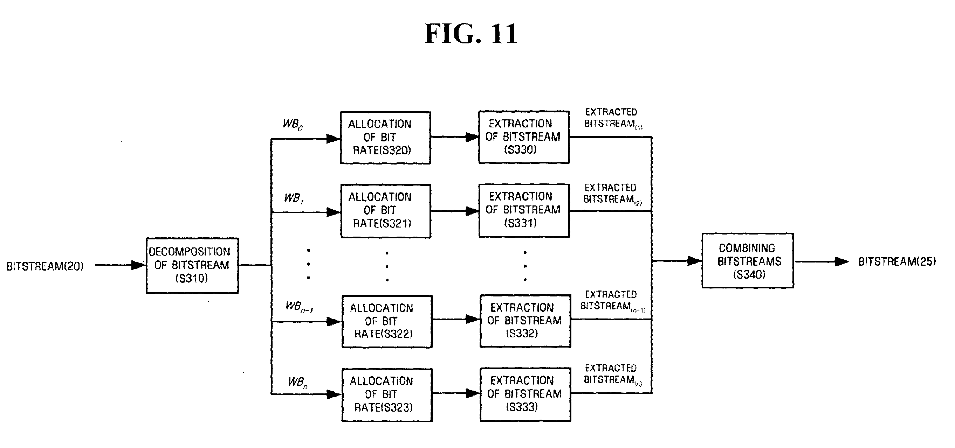

FIG. 11 is a flowchart of a method of using an ROI in a pre-decoder, according to an embodiment of the present invention.

The bitstream 20 received from the encoder 300 is decomposed into bitstreams for respective wavelet blocks in step S310.

The decomposed bitstreams, i.e., wavelet blocks WB are allocated bit rates, respectively, in steps S320 through S323. For allocation of bit rates, a target bit rate is determined, and higher bit rates are allocated to portions determined as being more important than other portions such that the sum of allocated bit rates becomes the target bit rate.

Next, bitstreams are truncated according to the allocated bit rates, thereby extracting new bitstreams in steps S330 through S333.

Next, the extracted new bitstreams are combined into a single bitstream 25 in step S340.

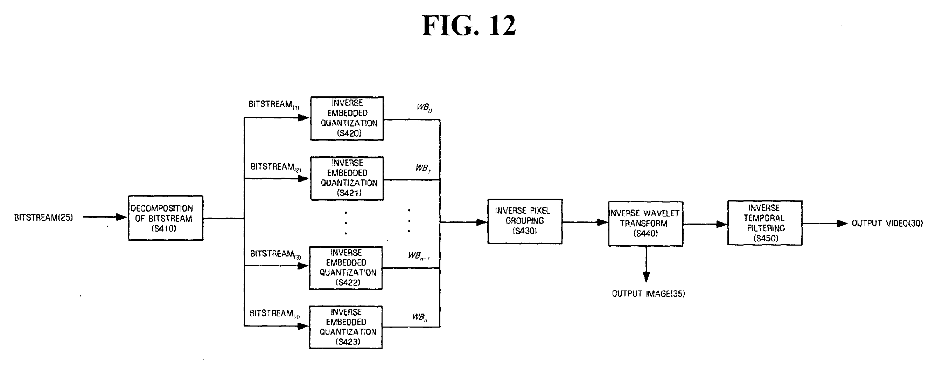

FIG. 12 is a flowchart of a decoding method according to an embodiment of the present invention.

The bitstream 25 received from the pre-decoder 350 is decomposed into bitstreams for respective wavelet blocks in step S410.

Inverse embedded quantization is individually performed on the decomposed bitstreams, thereby obtaining wavelet coefficients arranged in the wavelet blocks WB in steps S420 through S423.

Inverse pixel grouping is performed by rearranging the wavelet coefficients arranged in the wavelet blocks, thereby restoring the wavelet coefficients for a single entire image in step S430.

Inverse wavelet transform is performed on the wavelet coefficients rearranged in the entire image, thereby reconstructing a frame in a spatial domain in step S440.

Inverse temporal filtering is performed using the reconstructed frame and motion vectors received from the encoder 300, thereby generating a final output video 30 in step S450.

When the bitstream 25 relates to image information not video information, steps S410 through S440 are performed on the bitstream 25, thereby generating an output image 35.

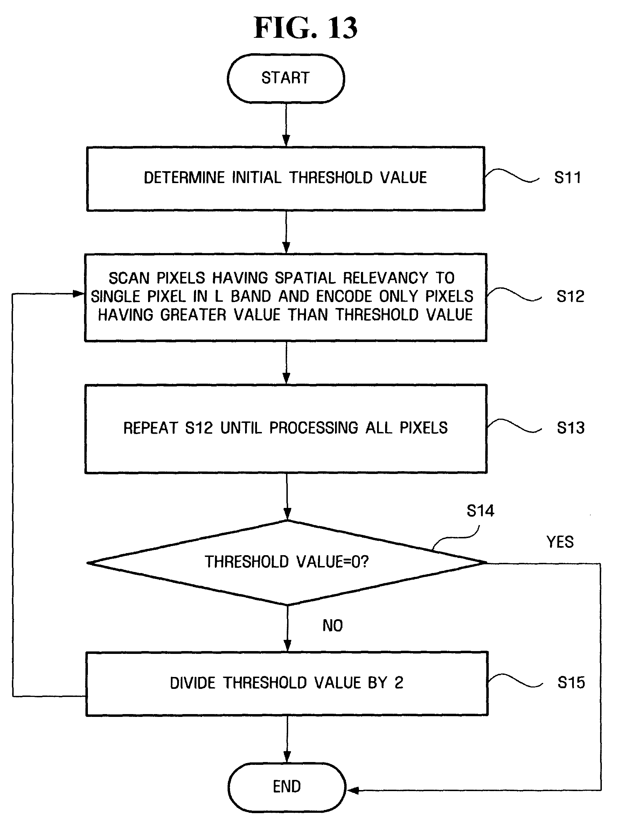

FIG. 13 is a flowchart of conventional embedded quantization. Conventional embedded quantization includes EZW, SPIHT, EZBC, etc. These methods use a zerotree or a zeroblock.

An initial threshold value is determined in step S11. Next, pixels having spatial relevancy to a single pixel in an L band are scanned, and only pixels having a greater value than the threshold value are encoded in step S12. It will be noticed that a pixel value in a wavelet domain indicates a wavelet coefficient.

Next, step S12 is repeated on pixels having spatial relevancy to another pixel in the L band. As such, step S12 is repeated until all pixels are processed in step S13. Next, the threshold value is divided by 2 in step S15, and steps S12 through S14 are repeated. When the threshold value is 0 in step S14, the embedded quantization ends.

FIG. 14 is a flowchart of embedded quantization, i.e., S250 through S253 shown in FIG. 10, according to an embodiment of the present invention.

In the present invention, spatial relevancy to a pixel in the L band is used as shown in FIG. 7, and thus a conventional algorithm can be easily used. In other words, while a threshold value is decreased step by step, encoding is performed with respect to one wavelet block, i.e., grouped pixels having spatial relevancy to a basic unit, and when the threshold value becomes 0, another wavelet block is processed. As described above, conventional embedded quantization such as EZW, EZBC, or SPIHT is used in the present invention, and thus an ROI function can be added to an image coding method.

Differences between conventional embedded quantization and embedded quantization used in the present invention are illustrated in FIG. 14. Referring to FIG. 14, an initial threshold value is determined in step S21. Next, pixels existing in one wavelet block, i.e., pixels having spatial relevancy to a basic unit in an L band are scanned, and only pixels having a greater value than the threshold value are encoded in step S22. Next, the threshold value is divided by 2 in step S24, and step S22 is repeated. When the threshold value becomes 0 in step S23, another wavelet block is subjected to steps S22 through S24 until the threshold value becomes 0. As such, steps S22 through S24 are repeated until all wavelet blocks are processed in step S25.

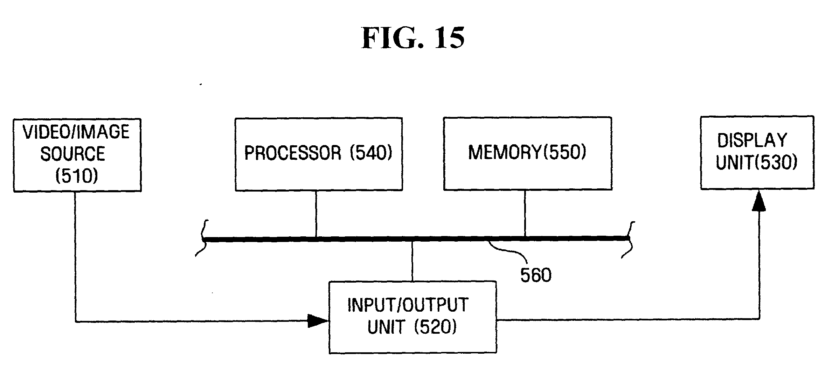

FIG. 15 is a block diagram of a system for performing an encoding, pre-decoding, or decoding method according to an embodiment of the present invention. The system may be a television (TV), a set-top box, a desktop, laptop, or palmtop computer, a personal digital assistant (PDA), or a video or image storing apparatus (e.g., a video cassette recorder (VCR) or a digital video recorder (DVR)). In addition, the system may be a combination of the above-mentioned apparatuses or one of the apparatuses which includes a part of another apparatus among them. The system includes at least one video/image source 510, at least one input/output unit 520, a processor 540, a memory 550, and a display unit 530.

The video/image source 510 may be a TV receiver, a VCR, or other video/image storing apparatus. The video/image source 510 may indicate at least one network connection for receiving a video or an image from a server using Internet, a wide area network (WAN), a local area network (LAN), a terrestrial broadcast system, a cable network, a satellite communication network, a wireless network, a telephone network, or the like. In addition, the video/image source 510 may be a combination of the networks or one network including a part of another network among the networks.

The input/output unit 520, the processor 540, and the memory 550 communicate with one another through a communication medium 560. The communication medium 560 may be a communication bus, a communication network, or at least one internal connection circuit. Input video/image data received from the video/image source 510 can be processed by the processor 540 using at least one software program stored in the memory 550 and can be executed by the processor 540 to generate an output video/image provided to the display unit 530.

In particular, the software program stored in the memory 550 includes a scalable wavelet-based codec performing a method of the present invention. The codec may be stored in the memory 550, may be read from a storage medium such as a compact disc-read only memory (CD-ROM) or a floppy disc, or may be downloaded from a predetermined server through a variety of networks.

According to the exemplary embodiments of the present invention, blocking artifacts occurring when an image is segmented into blocks and an ROI function is used can be remarkably decreased.

In addition, since spatial similarity that is a characteristic of wavelet transform can be utilized appropriately, performance loss due to the ROI function can be minimized.

Moreover, since wavelet transform is first performed with respect to an entire image, and then the ROI function is applied to segmented blocks of the image, a conventional problem of wavelet transform efficiency being decreased when a size of the segmented blocks is decreased can be solved.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of compressing a video or image, comprising:
generating wavelet coefficients by performing wavelet transform on an input image;
rearranging the wavelet coefficients in wavelet blocks according to spatial relevancy among the wavelet coefficients; and
quantizing the wavelet coefficients in each of the wavelet blocks.

2. The method of claim 1, wherein the video or image is a still picture.

3. The method of claim 1 or 2, wherein the input image is a frame obtained by removing temporal redundancy from an input video.

4. The method of any preceding claim, wherein the video or image is a moving picture.

5. The method of any preceding claim, further comprising allocating different bit rates to the respective wavelet blocks according to a degree of significance of each wavelet block.

6. The method of claim 5, wherein the different bit rates are allocated such that a sum of the allocated bit rates becomes a target bit rate.

7. The method of claim 5 or 6, wherein the degree of significance is determined based on complexity of an image corresponding to each wavelet block.

8. The method of any preceding claim, wherein rearranging the wavelet coefficients comprises:
selecting as basic units a predetermined number of pixels in a lowest L band among sub-bands generated after the wavelet transform; and
rearranging wavelet coefficients having spatial relevancy to each of the basic units in a wavelet block.

9. The method of claim 8, wherein the predetermined number of pixels is one.

10. The method of any preceding claim, wherein quantizing is performed using embedded quantization.

11. The method of claim 10, wherein quantizing the wavelet coefficients comprises:
determining an initial threshold value; and
scanning all wavelet coefficients in a wavelet block and encoding wavelet coefficients greater than the initial threshold value.

12. The method of claim 11, wherein quantizing the wavelet coefficients further comprises dividing the initial threshold value by 2 and repeating the scanning and encoding using a new threshold value resulting from the division.

13. A method of decompressing a video or image, comprising:
obtaining wavelet coefficients arranged in wavelet blocks according to spatial relevancy using an input bitstream;
rearranging the wavelet coefficients in a single entire image; and
transforming the rearranged wavelet coefficients to reconstruct an image in a spatial domain.

14. The method of claim 13, further comprising generating an output video by performing inverse temporal filtering using the reconstructed image and a motion vector.

15. The method of claim 13 or 14, wherein the video or image is a still picture.

16. The method of any of claims 13-15, wherein the video or image is a moving picture.

17. The method of any of claims 13-16, further comprising generating the input bitstream by allocating different bit rates to the wavelet blocks in a bitstream according to a degree of significance of each wavelet block, before obtaining the wavelet coefficients.

18. An apparatus (300) for compressing a video or image, comprising:
a wavelet transform unit (304) which is operable to generate wavelet coefficients by performing wavelet transform on an input image;
a pixel grouping unit (305) which is operable to rearrange the wavelet coefficients in wavelet blocks according to spatial relevancy among the wavelet coefficients; and
an embedded quantization unit (306) which is operable to quantize the wavelet coefficients in each of the wavelet blocks.

19. The apparatus of claim 18, wherein the input image is a frame obtained by removing temporal redundancy from an input video.

20. The apparatus of claim 18 or 19, further comprising a bit rate allocation unit which is operable to allocate different bit rates to the respective wavelet blocks according to a degree of significance of each wavelet block.

21. The apparatus of claim 20, wherein the bit rate allocation unit is operable to allocate the different bit rates such that a sum of the allocated bit rates becomes a target bit rate.

22. The apparatus of claim 20 or 21, wherein the degree of significance is determined based on complexity of an image corresponding to each wavelet block.

23. The apparatus of any of claims 18-22, wherein the pixel grouping unit (305) is operable to select as basic units a predetermined number of pixels in a lowest L band among sub-bands generated after the wavelet transform and rearranges wavelet coefficients having spatial relevancy to each of the basic units in a wavelet block.

24. The apparatus of any of claims 18-23, wherein the embedded quantization unit is operable to determine an initial threshold value, to scan all wavelet coefficients in a wavelet block, and to encode wavelet coefficients greater than the initial threshold value.

25. An apparatus (400) for decompressing a video or image, comprising:
an inverse embedded quantization unit (420) which is operable to obtain wavelet coefficients arranged in wavelet blocks according to spatial relevancy using an input bitstream;
an inverse pixel grouping unit (430) which is operable to rearrange the wavelet coefficients arranged in the wavelet blocks in a single entire image; and
an inverse wavelet transform unit (440) which is operable to transform the rearranged wavelet coefficients to reconstruct an image in a spatial domain.

26. The apparatus of claim 25, further comprising an inverse temporal filtering unit (450) which is operable to generate an output video by performing inverse temporal filtering using the reconstructed image and a motion vector.

27. The apparatus of claim 25 or 26, further comprising a bit rate allocation unit which is operable to generate the input bitstream by allocating different bit rates to the wavelet blocks in a predetermined bitstream according to a degree of significance of each wavelet block.

28. A recording medium having a computer readable program recorded therein, the program for executing a method of compressing a video or image, said method comprising:
generating wavelet coefficients by performing wavelet transform on an input image;
rearranging the wavelet coefficients in wavelet blocks according to spatial relevancy among the wavelet coefficients; and
quantizing the wavelet coefficients in each of the wavelet blocks.
